# EUROPÄISCHE PATENTSCHRIFT

(11) **EP 1 974 158 B1**
(45) Veröffentlichungstag und Bekanntmachung des Hinweises auf die Patenterteilung: **04.04.2012**
(21) Anmeldenummer: 07712036.8
(22) Anmeldetag: 16.01.2007
(51) Int. Cl.: F16J 15/12, F16L 23/18, F16J 15/06

(54) **DICHTUNGSANORDNUNG**
SEALING ARRANGEMENT
DISPOSTIF D' ETANCHEITE

(30) Priorität: 17.01.2006 DE 202006000726 U; 26.01.2006 DE 202006001224 U; 08.02.2006 DE 102006005660; 28.08.2006 WO PCT/EP2006/065747
(43) Veröffentlichungstag der Anmeldung: 01.10.2008
(73) Patentinhaber: Jung, Alfred, 50935 Köln (DE)
(72) Erfinder: Jung, Alfred, 50935 Köln (DE)
(74) Vertreter: Richter, Thomas Kurt Reinhold
(86) Internationale Anmeldenummer: PCT/EP2007/050400
(87) Internationale Veröffentlichungsnummer: WO 2007/082887

(56) Entgegenhaltungen:
- EP-A1- 0 939 263
- EP-A2- 0 268 134
- WO-A-99/45298
- DE-A1- 2 501 000
- DE-A1- 3 633 335
- DE-A1- 10 011 646
- DE-U1- 8 704 943
- FR-A- 396 914

## Beschreibung

Gegenstand der vorliegenden Erfindung ist eine Dichtungsanordnung, insbesondere für flache Flanschverbindungen, bestehend aus einem ringförmigen, metallischen Grundkörper und beidseitig vorhandenen Weichstoffauflagen vorzugsweise aus Graphit oder PTFE oder sonstigen Weichstoffauflagen, wobei der Grundkörper innen und/oder außen radial umlaufende Ringzähne aufweisen kann, die im eingebauten Zustand einen punktuellen, metallischen Kontakt ermöglichen und eine Federcharakteristik aufweisen, welche so gewählt ist, dass nach dem Ausbau der Dichtung aus den Flanschen die Zahnhöhen in den Zustand wie vor dem Einbau zurückentspannen können und damit nahezu die ursprüngliche Zahnhöhe zurückerlangt wird.

Dichtungsanordnungen dieser Art sind beschrieben in der EP 1062442 und haben sich inzwischen in der Praxis gut bewährt.

Weiterhin sind seit vielen Jahren sogenannte Wellringdichtungen bekannt, bei denen sich auf beiden Seiten von wellenförmigen, metallischen Grundkörpern Weichstoffauflagen befinden, wobei diese Weichstoffauflagen beim Einbau in einen Flanschspalt zum Teil in die Wellen eingepresst werden. Durch den geforderten hohen Anpressdruck werden die Wellen des Grundkörpers irreversibel auseinander gespreizt und können dabei weitgehend flachgedrückt werden. Wesentliche weitere Nachteile der Wellringdichtungen sind die schlechte Ausblassicherheit, die zunehmende Undichtigkeit der Flanschverbindungen bei Beanspruchungen durch Druck- und Temperaturschwankungen und die relativ hohe Einbaudicke von mehr als 2 mm vor dem Einbau. Diese hohe Einbaudicke erfordert beim Einbau große Flanschspalten und führt oftmals zu Beschädigungen der Weichstoffauflagen auch schon beim Einbau. Ein großer Nachteil der Wellringdichtungen ist aber insbesondere die irreversible, radiale Ausdehnung der Dichtung beim Anpressen, bei welcher der gewellte Grundkörper irreversibel flach gestreckt werden kann. Wellringdichtungen haben sich daher in der Praxis nicht besonders bewährt insbesondere bei hohen Beanspruchungen und hohen Anforderungen an nachhaltige Dichtigkeit.

Bei den Dichtungsanordnungen gemäß EP 1062442 ist der mit der Weichstoffauflage abgedeckte Bereich flach ausgestaltet. Es findet somit keine irreversible Verformung des metallischen Grundkörpers in diesem Bereich statt. Die Weichstoffauflagen werden beim Anziehen der Flanschschrauben nahezu maximal verdichtet und sind so dimensioniert, dass die Spitzen der Ringzähne mit einer Federcharakteristik in metallischen Kontakt mit den Flanschoberflächen kommen. Der metallische Grundkörper und seine Ringzähne werden somit nicht irreversibel verformt. Diese Besonderheiten führen dazu, dass die Beanspruchungen durch Druck- und Temperaturschwankungen elastisch aufgefangen werden und dadurch die nachhaltige hohe Dichtigkeit entsteht.

Der Erfindung liegt die Aufgabe zugrunde, die nachhaltige Dichtigkeit weiter zu verbessern.

Die Lösung der Aufgabe erfolgt erfindungsgemäß durch die Merkmale des Anspruchs 1 bzw. 2.

Bei einer ersten bevorzugten Ausführungsform der erfindungsgemäßen Dichtungsanordnung, durch die die Dichtigkeit verbessert wird, weist diese einen ringförmigen metallischen Grundkörper auf. Der Grundkörper ist beidseitig mit Weichstoffauflagen belegt, wobei es sich bei den Weichstoffauflagen insbesondere um Auflagen handelt, die Graphit und/oder PTFE aufweisen. Ferner weist der Grundkörper mehrere radial umlaufende Ringzähne auf. Im eingebauten Zustand erfolgt bei mindestens einem der Ringzähne ein linienförmiger, metallischer Kontakt zwischen dem Ringzahn und der Dichtfläche. Erfindungsgemäß weist der metallische Grundkörper eine Dicke von weniger als 0,5 mm, vorzugsweise eine Dicke von weniger als 0,49 mm und besonders bevorzugt eine Dicke von weniger als 0,3 mm auf. Überraschenderweise ist es trotz der geringen Dicke des metallischen Grundkörpers möglich, diesen umzuformen und durch die Umformung die Ringzähne herzustellen. Trotz der geringen Materialstärke und des auftretenden Fliessen des Materials beim Umformen, treten bedingt durch die Konstruktion überraschenderweise keine Rissbildungen auf. Die Ringzähne haben erfindungsgemäß einerseits die Funktion, dass zumindest zwischen einem der Ringzähne und der Dichtfläche ein metallischer Kontakt sichergestellt ist. Ferner dienen die Ringzähne zur Erhöhung der Steifigkeit des metallischen Grundkörpers. Erst durch das erfindungsgemäße Vorsehen von radial umlaufenden Ringzähnen ist es möglich ein derart dünnen Grundkörper, der insbesondere aus einem dünnen Metallblech hergestellt ist, vorzusehen.

Erfindungsgemäß weist der Bereich des Grundkörpers, der von den Weichstoffauflagen abgedeckt ist, mindestens einen winkelförmigen Ringzahn auf, der beim Einbau zumindest teilweise plastisch verformt wird. Bei einer weiteren bevorzugten Ausführungsform der Erfindung besteht der wesentliche Aspekt darin, dass der Grundkörper in dem von der Weichstoffauflage abgedeckten Bereich mindestens einen winkelförmigen Ringzahn aufweist. Bei dieser Ausführungsform ist es nicht unbedingt erforderlich, jedoch bevorzugt, dass auch in dem nicht abgedeckten Bereich mindestens ein umlaufender Ringzahn vorgesehen ist, der im eingebauten Zustand einen linienförmigen metallischen Kontakt ermöglicht.

Erfindungsgemäß ist die Aufgabe bei einer besonders bevorzugten Ausführungsform dadurch gelöst, dass der Bereich des Grundkörpers, der von der Weichstoffauflage abgedeckt ist, mindestens einen winkelförmigen Ringzahn aufweist.

Bei einer bevorzugten Ausführungsform ist der im Bereich der Weichstoffauflage vorgesehene Ringzahn, zumindest teilweise plastisch verformbar, wobei die Verformung beim Einbau der Dichtungsanordnung in eine Flanschverbindung erfolgt. Die Form des mindestens einen Ringzahns, die Dicke des metallischen Grundkörpers, sowie die verwendete Metalllegierung sind somit erfindungsgemäß derart gewählt, dass in Abhängigkeit der beim Einbau auftretenden Kräfte der mindestens eine Ringzahn zumindest teilweise plastisch verformt wird. Insbesondere ist es erfindurigsgemäß bevorzugt, den Grundkörper aus Edelstahl herzustellen. Die auftretenden Kräfte sind hierbei von der Art, der Größe und/oder am Einsatzgebiet der Flanschverbindung abhängig. Auf Grund der plastischen Verformung der Zähne, die vorzugsweise nur teilweise erfolgt, so dass eine Restelastizität verbleibt, wird im eingebauten Zustand durch die Zahnspitze im Druckverlauf über den Querschnitt der Dichtung eine Druckspitze erzeugt. In den entsprechenden linienförmigen Bereichen der Zahnspitze ist somit die Dichtigkeit erhöht. Dies führt zur Verbesserung der Dichtigkeit der erfindungsgemäßen Dichtungsanordnung. Besonders bevorzugt ist es hierbei, dass die plastische Verformung der in dem Bereich der Dichtungsauflage angeordneten Ringszähne, derart erfolgt, dass die Zähne eine Federcharakteristik von 50 bis 100%, vorzugsweise 75 bis 100% aufweisen. Hierunter wird verstanden, dass der entsprechende Ringzahn nach einem erneuten Ausbau der Flanschverbindung die ursprüngliche Höhe, d. h. die Höhe vor dem ersten Einbau, um 50 bis 100% erreicht. Bei einer ursprünglichen Zahnhöhe von 0,5 mm weist der Zahn nach dem Ausbau wieder eine Zahnhöhe von 0,25 bis 0,5 mm auf.

Vorzugsweise federn die nicht mit einer Weichstoffauflage belegten Ringzähne, sofern derartige Ringzähne vorhanden sind, nach dem Ausbau um 75 bis 100% zurück.

Vorzugsweise ist auf jeder Seite des metallischen Grundkörpers jeweils ein Ringzahn im Bereich der Weichstoffauflage vorgesehen. Es handelt sich hierbei um ringförmige Zähne, so dass eine vollständige Abdichtung um den gesamten Flansch herum sichergestellt ist. Die auf den beiden Seiten des metallischen Grundkörpers angeordneten Ringzähne liegen vorzugsweise einander gegenüber, so dass die in den Berührungslinien erzeugten Kräfte aufeinander zugerichtet und seitlich nicht zueinander versetzt sind.

Bei einer weiteren bevorzugten Ausführungsform ist der mindestens eine Ringzahn im Bereich der Weichstoffauflage derart ausgebildet, dass der Ringzahn nach dem Ausbau im wesentlichen wieder in den Ursprungszustand zurückfedert. Kennzeichnend ist hierin somit der federnde Charakter, wobei eine geringe plastische Verformung akzeptabel ist. Der wesentliche Vorteil eines derartigen Ringzahns besteht ebenfalls darin, dass im Bereich der Zahnspitze eine Druckspitze erzeugt wird. Hierdurch wird die Dichtigkeit der Dichtungsanordnung deutlich verbessert. Diese Ausführungsform weist mehrere im Bereich der Weichstoffauflage angeordnete Ringzähne auf, wobei vorzugsweise auf jeder Seite des metallischen Grundkörpers mindestens ein derartiger Ringzahn angeordnet ist.

Es handelt sich somit erfindungsgemäß nicht mehr um die herkömmlichen Wellringdichtungen, sondern um eine neue Art der Dichtungsanordnung, die auch als Winkelringdichtung bezeichnet werden kann.

Die nachfolgend aufgeführten besonders bevorzugten Weiterbildungen betreffen beide, unabhängige Ausführungsformen.

Die Dichtungsanordnung nach Anspruch 1 weist erfindungsgemäß im ursprünglichen Zustand vor dem Einbau nur eine Dicke von weniger als 2,2 mm, insbesondere weniger als 1,7 mm auf.

Vorzugsweise weist die neue Dichtungsanordnung nach Anspruch 2 im ursprünglichen Zustand vor dem ersten Einbau nur eine Dicke von weniger als 2,2 mm, insbesondere weniger als 1,7 mm auf. Sie können somit auch bei geringen Breiten der Flanschspalten leicht und ohne Verletzung der Weichstoffauflagen eingebaut werden..

Die metallischen Grundkörper ohne Weichstoffauflagen haben vorzugsweise über die Metallspitzen gemessen nur eine Dicke von weniger als 1,2 mm, vorzugsweise 0,4 bis 0,8 mm.

Die Höhe der Ringzähne kann in den mit der Weichstoffauflage bedeckten Bereichen, sowie in den nicht mit einer Weichstoffauflage bedeckten Bereichen unterschiedlich sein. Dies ist beispielsweise von der Art der verwendeten Weichstoffauflage und dem Einsatzgebiet der Dichtungsanordnung abhängig. Ist insbesondere der metallische Kontakt eines oder mehrerer Innen- und/oder außenliegenden Ringzähne für die Dichtigkeit von wesentlicher Bedeutung, können diese Ringzähne eine größere Höhe als die im Bereich der Weichstoffauflage vorgesehenen Ringzähne aufweisen. Vorzugsweise weisen insbesondere die radial außerhalb der Weichstoffauflage angeordneten Ringzähne eine geringere Höhe als die mit der Weichstoffauflage bedeckten Ringzähne auf. Hierdurch ist sichergestellt, dass im Bereich der Weichstoffauflage eine ausreichende Flächenpressung gewährleistet ist. Ferner ist hierdurch eine ausreichende Verdichtung der Weichstoffauflage sichergestellt. Besonders bevorzugt ist es, dass mindestens ein in radialer Richtung außerhalb und/oder innerhalb der Weichstoffauflage angeordneter Ringzahn zumindest die selbe Höhe, wie die Weichstoffauflage aufweist. Die übrigen innerhalb und/oder außerhalb der Weichstoffauflage angeordneten Ringzähne weisen sodann eine geringere Höhe auf. Hierdurch ist ein dichtender metallischer Kontakt gewährleistet. Insbesondere bei mindestens einem sowohl außerhalb als auch innerhalb der Weichstoffauflage angeordneten Ringzahn mit mindestens gleicher Höhe ist ein Kapseln der Weichstoffauflage sichergestellt. Hierdurch ist sowohl ein Ausblasen der Weichstoffauflage als auch ein Eindringen von Dichtmaterial in das transportierte Medium vermieden.

Die radial innerhalb oder außerhalb der Weichstoffauflage ggf. angeordneten Ringzähne können zur Veränderung der Federcharakteristik auch einen größeren Winkel als der mindestens eine im Bereich der Weichstoffauflage angeordnete Ringzahn aufweisen. Ggf. können die Ringzähne mit stumpferem Winkel zusätzlich eine geringere Höhe aufweisen.

Selbstverständlich muss der Grundkörper aber noch so dick sein, dass er stabil genug ist, die zusammengepresste Weichstoffauflage aufzunehmen und eine Federcharakteristik aufzuweisen. Vorzugsweise bestehen die metallischen Grundkörper daher aus einem Blech, welches eine Stärke von mindestens 0,05 mm, aber weniger als 0,49 mm insbesondere weniger als 0,45 mm aufweist. Besonders bevorzugt sind Blechstärken von ca. 0,1 mm Die Herstellung der winkelförmigen Ringzähnen erfolgt somit vorzugsweise aus einem möglichst korrosionsfesten Edelstahl, der mit entsprechend ausgebildeten Werkzeugen so dauerhaft verformt wird, dass innen fast spitze Ecken und außen schwach abgerundete Kanten entstehen.

Es ist dabei durchaus möglich winkelzahnförmige Grundkörper herzustellen und erfindungsgemäß einzusetzen, die im mit der Weichstoffauflage abgedeckten Bereich über die Metallspitzen gemessen eine geringere Dicke aufweisen, als die gegebenenfalls vorhandenen freiliegenden Ringzähne. Ausführungsformen mit freiliegenden Ringzähnen ermöglichen im eingebauten Zustand den bereits aus der EP1062442 bekannten metallischen Kontakt mit Federcharakteristik. Auch bei diesen Ausführungsformen werden die Weichstoffauflagen nahezu maximal verdichtet.

Um die Dicke der bevorzugten Dichtungsanordnungen vor dem ersten Einbau in einen Flanschspalt unter 2 mm, bzw. sogar unter 1,7 mm zu halten, werden vorzugsweise Graphitauflagen verwendet, die vor dem Einbau bei einer Dichte von ca. 0,7 oder 1,0 kg/m³ eine Dicke von größer 0,5 mm und bei einer Dichte von ca. 1,0 kg/m³ eine Dicke von 0,25 bis 0,5 mm aufweisen. Dabei ist darauf zu achten, dass die Weichstoffauflagen im eingebauten Zustand ausreichen, den Zwischenraum zwischen den Ringzähnen auszufüllen und dabei sowohl über den Zahnspitzen als auch über den Tälern nahezu maximal verdichtet sind. Hierbei erfolgt eine Verdichtung der Weichstoffauflage, insbesondere wenn es sich um eine Graphitstoffauflage handelt, um mindestens 40 vorzugsweise mindestens 45 und besonders bevorzugt mindestens 50%.

Die Graphitauflagen können auch schon bei der Herstellung der Winkelringdichtung mittels Spezialwerkzeugen beidseitig in die Ringzähne eingepresst werden. Die Graphitauflagen sind dann sowohl im Innendurchmesser, als auch im Außendurchmesser nur noch etwas größer als die Ringzähne.

Durch die beidseitige Überlappung der Graphitauflage wird die Befestigung erleichtert und vermindert sich die Verletzungsgefahr durch den dünnen Grundkörper.

Die Befestigung der Weichstoffauflagen erfolgt vorzugsweise durch Verkleben. Es kann aber auch durch Klebstoff-freie Verfahren erfolgen.

Vorzugsweise ist der Abstand zwischen je zwei Ringzähnen kleiner als 4 mm und kann bis auf einen Abstand von 0,5 mm vermindert werden. Der nicht mit der Weichstoffauflage abgedeckte Bereich kann 1 bis 100 Ringzähne aufweisen. Insgesamt besitzen die Grundkörper mindesten 3 und nur in Ausnahmefällen insgesamt 140 Ringzähne.

Besonders bevorzugte Ausführungsformen der Dichtungsanordnungen bestehen somit aus einem Grundkörper aus einem 0,1 bis 0,49 mm, vorzugsweise 0,1 bis 0,3 mm starken Blech, welches in Abständen von 0,5 bis 4 mm, vorzugsweise in Abständen von 1 bis 2,8 mm, besonders bevorzugt 1 bis 2 mm Zacken aufweist, die über die Spitzen gemessen eine Höhe von 0,4 bis 0,8 mm aufweisen und mit Weichstoffauflagen abgedeckt sind, die eine Dicke von ursprünglich 0,25 bis 1,0 mm besitzen. Je dünner das eingesetzte Blech ist, desto geringer kann der Abstand der Ringzähne untereinander gewählt werden. Auch die Weichstoffauflage kann dann entsprechend dünn gewählt werden. Entscheidend ist aber, dass die Weichstoffauflage nach dem Einbau optimal verdichtet ist und die Räume zwischen den Ringzähnen damit vollständig ausfüllt werden. So kann ein besonders bevorzugter Grundkörper eingesetzt werden, der beispielsweise bei einer Blechstärke unter 0,5 mm, vorzugsweise von 0,1 bis 0,3 mm, über die Spitzen gemessen eine Höhe unter 1,35 mm und einem Abstand der Zähne unter 3 mm mit Graphitauflagen abgedeckt werden, die bei einer Dichte von 0,7 kg/m³ eine Stärke von 1 mm und bei einer Dichte von 1,0 kg/m³ eine Stärke von 0,5 mm aufweisen. Dabei können wiederum innen und/oder außen nicht abgedeckte Ringzähne vorhanden sein, die im eingebauten Zustand zu metallischem Kontakt führen und ebenfalls Federcharakteristik aufweisen.

Diese erfindungsgemäßen Ausführungsformen der Winkelringdichtungen führen zu einer verstärkten und verbesserten Abdichtung mit nachhaltiger Federcharakteristik und sind allen bisher bekannten Dichtungsanordnungen überlegen. Dieses Ergebnis war nicht zu erwarten, da diese Ausführungsformen zwar wie die Wellringdichtungen sich beim Anziehen der Flanschschrauben flacher strecken und sich somit in ihren Dimensionen insbesondere radial vergrößern. Die Veränderung der Dimensionen ist aber bei den erfindungsgemäßen Winkelringdichtungen reversibel. Die Federcharakteristik führt daher zu der nachhaltig besseren Abdichtung insbesondere bei stärkeren Druck- und Temperaturbelastungen. Die Veränderung der Dimensionen im abgedeckten Bereich sind erfindungsgemäß reversibel und können sogar von den vorzugsgemäß vorhandenen, freiliegenden Ringzähnen aufgefangen und in den abgedeckten Bereich zurückgegeben werden.

Die Ringzähne weisen vorzugsweise abgerundete Spitzen auf. Insbesondere weisen die Spitzen einen Radius auf, der ≧ 1 mm, vorzugsweise ≧ 0,75 mm und besonders bevorzugt ≧ 0,5 mm ist. Vorzugsweise ist auch der innere Bereich der Ringzähne, d. h. der der abgerundeten Spitze gegenüberliegende Bereich abgerundet. Die Rundung weist vorzugsweise einen Radius von ≧ 0, 75 mm insbesondere ≧ 0,5 mm und besonders bevorzugt ≧ 0,25 mm auf.

Durch die Rundung der Spitzen im äußeren und/oder im inneren Bereich kann beim Umformen des Grundkörpers zum Herstellen der Ringzähne ein Reißen des insbesondere aus einem dünnen Blech hergestellten Grundkörpers vermieden werden.

Bei einer besonderes bevorzugten Weiterbildung ist der innerste der Ringzähne, d. h. der Ringzahn mit dem kleinsten Durchmesser, vorzugsweise derart ausgebildet, dass die nach innen weisende Flanke, d. h. das innere freie Ende der Dichtung bezogen auf die andere Flanke des Ringzahns mindestens eine Länge von 40% dieser. Flanke aufweist. Vorzugsweise weist diese Flanke bezogen auf die Längsrichtung des Flansches bzw. bezogen auf eine Senkrechte zur Dichtungsebene einen Winkel von 30 bis 70°, insbesondere ca. 45° auf. Hierdurch ist eine dichte Anlage des Ringzahns an dem Flansch gewährleistet. Durch die Länge der innenliegenden Flanke wird auf Grund des Mediendrucks des durch den Flansch strömenden Mediums, die Zahnspitze an den Flansch gepresst. Hierdurch ist die Dichtigkeit weiter verbessert.

Bei einer Dichtbreite für ANSI B 16,5 Flansche weist die Graphitauflage vorzugsweise in Abhängigkeit des Rohrdurchmessers auf jeder Seite eine Breits auf, die kleiner ist als:
19 mm pro Seite bei 1 Zoll
16 mm pro Seite bei 2 Zoll
19 mm pro Seite bei 3 Zoll
21 mm pro Seite bei 4 Zoll
24 mm pro Seite bei 6 Zoll
25 mm pro Seite bei 8 und 10 Zoll
28 mm pro Seite bei 12 und 14 Zoll
32 mm pro Seite bei 16 Zoll
39 mm pro Seite bei 18 und 24 Zoll

Ferner ist es bevorzugt, dass die Dichtauflage ebenfalls für DIN-Flansche
bei DN 25 kleiner als 11 mm
bei DN 40 und50 kleiner als 13 mm
bei DN 80 kleiner als 15 mm
bei DN 100/150 kleiner als 17 mm
bei DN 200 bis DN 300 kleiner als 19 mm
bei DN 400 bis DN 500 kleiner als 26 mm
bei DN 600 kleiner als 27 mm
sind, um bei kleineren Graphitstreifen bei gleichen Anzugsmomenten der Schrauben, die vorgesehen sind durch den Schraubenhersteller, eine höhere Flächenpressung bei geprägten Dichtungen zu erzielen, so dass eine höhere Dichtheit erlangt wird.

Bevorzugte Ausführungsformen der erfindungsgemäßen Winketringdichtungen sind in den nachfolgenden schematischen Abbildungen näher erläutert.

In diesen Abbildungen bedeuten jeweils.
1 den metallischen Grundkörper
2 Weichstoffauflagen
3 freiliegende Ringzähne
4 freiliegende Ringzähne
5 mit Weichstoffauflagen abgedeckte Ringzähne
6 Teile eines Flansches
7 Teile einer Flanschschraube
8 spitze Ecken
9 runde Kanten
10 innenliegende Flanke
11 außenliegende Flanke
12 Zentrierring

L Flankenlänge
L' Flankenlänge

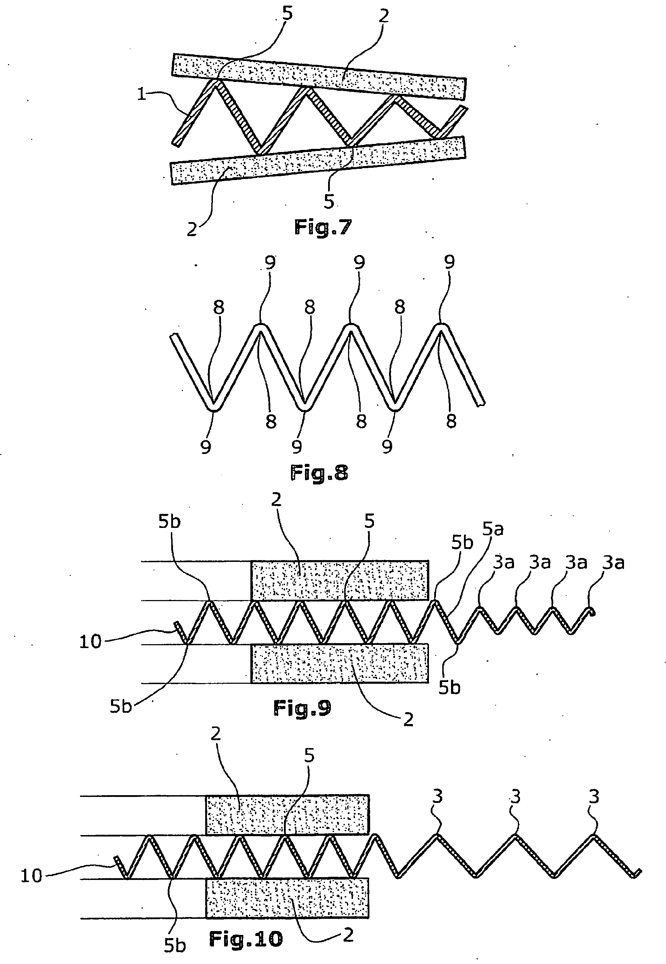

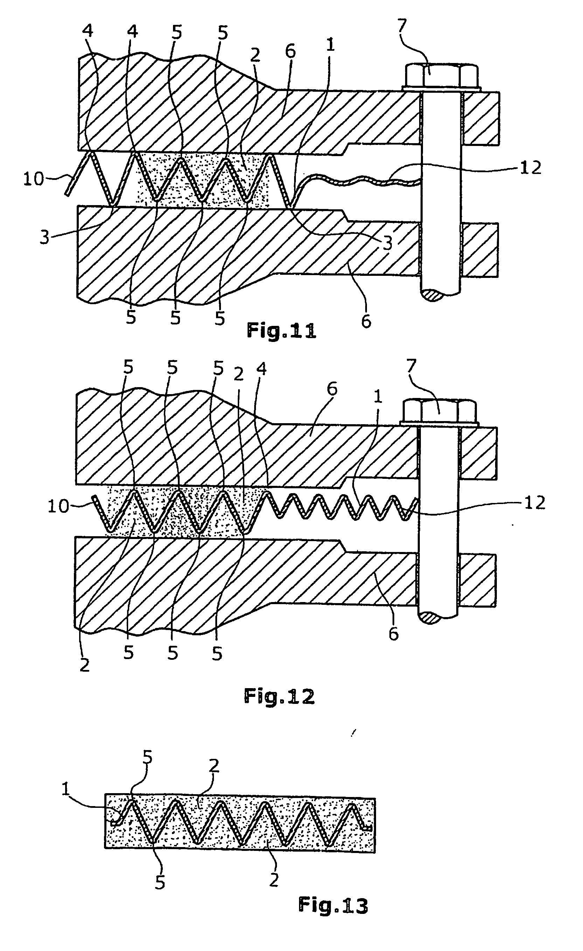

Bei den in den Figuren dargestellten bevorzugten Ausführungsformen der Erfindung handelt es sich um vereinfachte Darstellungen. Hierbei sind umlaufende Sichtkanten der rotationssymmetrischen Dichtung nicht dargestellt, bzw. nur angedeutet, um eine gute Übersichtlichkeit zu gewährleisten. In allen Figuren ist stets auf der linken Seite die Innenseite der Flanschverbindung, bzw. die Innseite der Dichtungsanordnung. In sämtlichen Zeichnungen liegt somit das mediumführende Rohr auf der linken Seite. Der Einbau der Dichtungen in einen Flansch ist in den Figuren 11 und 12 dargestellt.

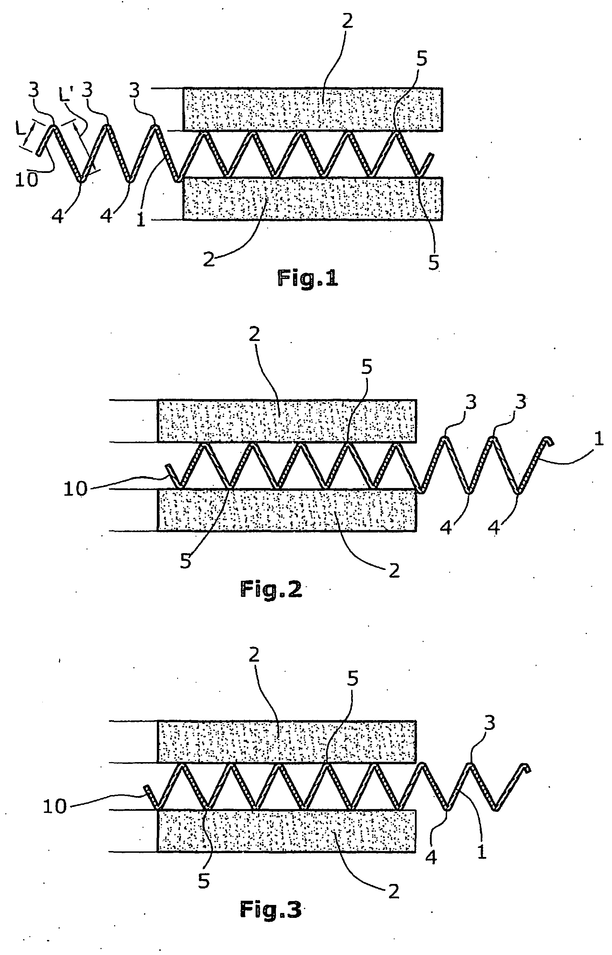

Figur 1 zeigt eine Ausführungsform, bei welcher einige Ringzähne 3,4 nach innen hin nicht von der Weichstoffauflage abgedeckt sind. Diese freiliegenden Ringzähne sind über die Zahnspitzen gemessen größer als die abgedeckten Ringzähne 5 und führen zu einer metallischen Abdichtung mit Federcharakteristik. Der innenliegende Ringzahn 3 weist eine freie Flanke 10 auf, die eine Länge L hat. Die Länge L ist kleiner als die Länge L', der entsprechenden anderen, weiter außenliegenden Flanke des inneren Ringzahns 3. Insbesondere weist die Flanke 10 eine Länge L von 40 'bis 60% der außenliegenden Flankenlänge L' auf. Hierdurch ist gewährleistet, dass die Spitze des innenliegenden Ringzahns 3 einen metallischen Kontakt zum Flansch aufweist. Die Flanke 10 weist den entsprechenden Winkel der anderen Flanken auf, so dass der innenliegende Ringzahn 3 im wesentlichen den selben Winkel wie die anderen Ringzähne 3 aufweist.
Figur 2 zeigt eine äquivalente Ausführungsform, bei der die freiliegenden größeren Ringzähne 3,4 nicht innen zum Medium hin, sondern im außen liegenden Bereich sind und an den Flanschschrauben 7 (Fign. 11, 12) zur Anlage kommen können.
Figur 3 zeigt eine ähnliche Ausführungsform wie Figur 2, wobei jedoch alle freien und abgedeckten Ringzähne 3,4,5 über die Zahnspitzen gemessen die gleiche Höhe haben und das Grafit 2 innen abdichtet. Die Weichstoffauflage 2 kann sich auch über die äußeren Ringzähne 3, 4 erstrecken.
Figur 4 zeigt einen Winkelringdichtung, bei der alle Ringzähne 5 die gleiche Höhe aufweisen und komplett mit der Weichstoffauflage 2 abgedeckt sind.
Figur 5 zeigt eine Winkelringdichtung, bei der innen wie außen freiliegende Ringzähne 3,4 vorhanden sind und nur der mittlere Bereich mit der Weichstoffauflage 2 abgedeckt ist.
Figur 6 zeigt eine ähnliche Ausführungsform wie Figur 5, bei der jedoch die abgedeckten Ringzähne 5 über die Spitzen gemessen eine etwas geringere Dicke aufweisen wie die freiliegenden Ringzähne 3,4 im Innen- und Außenbereich.
Figur 7 zeigt eine Ausführungsform der Winkelringdichtung, bei der die Dicke der Ringzähne 5 über die Spitzen gemessen von außen nach innen konisch zunimmt.
Figur 8 zeigt eine bevorzugte Ausführungsform des metallischen Grundkörpers 1 mit spitzen Winkeln und etwas abgerundeten Kanten 9 bzw. Zahnspitzen.
Fig. 9 zeigt eine weitere bevorzugte Ausführungsform der erfindungsgemäßen Dichtungsanordnung, bei der die außenliegenden Zentrier-Ringzähne 3a über den Spitzen eine geringe Höhe als die im Bereich der Weichstoffauflage 2 angeordneten Ringzähne aufweisen. Ferner weist ein unmittelbar an die Weichstoffauflage angrenzender, jedoch nicht mit einer Weichstoffauflage 2 bedeckter Ringzahn 5a, die selbe Höhe, wie die von der Weichstoffauflage 2 bedeckten Ringzähne 5 auf. Hierdurch ist ein linienförmiger metallischer Kontakt zwischen den Spitzen 5b und dem Flansch sichergestellt.
   Zusätzlich oder anstatt des Vorsehens eines Ringzahns 5a mit gleicher Höhe, sowie niedrigerer Zentrier-Ringzähne 3a auf der Außenseite der Weichstoffauflage 2 können derartige Zähne 5b auch auf der Innenseite vorgesehen sein.
Fig. 10 zeigt eine weitere bevorzugte Ausführungsform der Erfindung, bei der die außenliegenden Ringzähne 3,4 zwar die gleiche Höhe wie die mit der Weichstoffauflage 2 bedeckten Ringzähne 5 aufweisen, der Winkel der Ringzähne 3 jedoch stumpfer als der Winkel der Ringzähne 5 ist. Ggf. sind derartige, flach ausgebildete Ringzähne auch zusätzlich auf der Innenseite des Grundkörpers 1 oder ausschließlich auf der Innenseite des Grundkörpers 1 angeordnet.
   Ferner ist eine Kombination der in den Figuren 9 und 10 dargestellten Dichtungsanordnungen möglich. Beispielsweise können auf der Außenseite flachere und auch niedrigerer Ringzähne angeordnet sein. Auch können auf der Innen- und/oder Außenseite der Weichstoffauflage 2 flachere und gleichzeitig niedrigere Ringzähne vorgesehen sein.

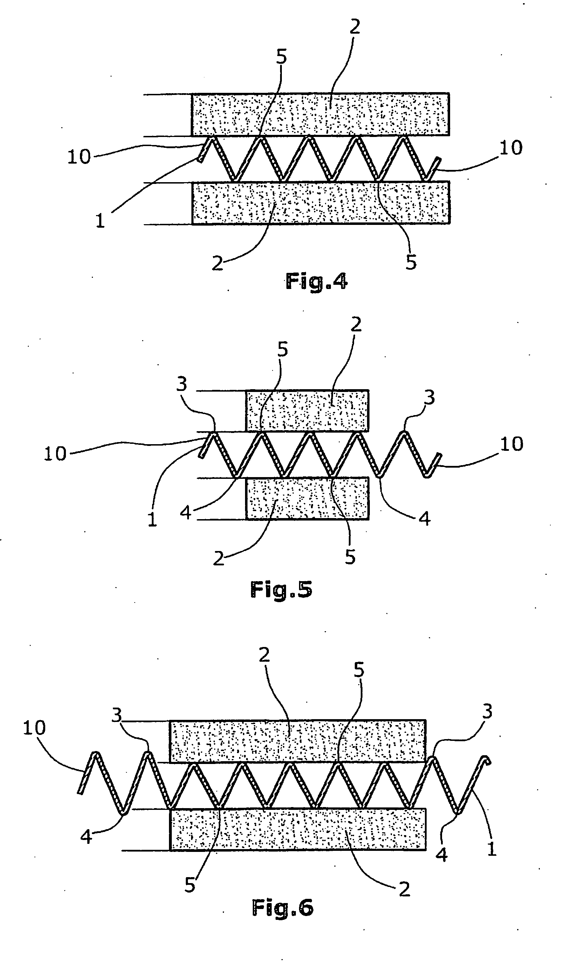

Figur 11 zeigt eine bevorzugte Winkelringdichtung mit einer schmalen Dichtbreite im eingebauten Zustand, bei der wie in Figur 5 und 6 außen und innen höhere, nicht abgedeckte Ringzähne 3,4 vorhanden sind, welche eine metallische Dichtung mit Federcharakteristik bewirken und in der Mitte die mit der Weichstoffauflage 2 abgedeckten Ringzähne 5 etwas niedriger sind, wobei die Weichstoffauflagen 2 sowohl über den Spitzen als auch in den dazwischen liegenden Tälern optimal verdichtet sind und dabei eine zusätzliche Federcharakteristik aufweisen. Ferner ist ein Zentrierring 12 vorgesehen, der im Querschnitt leicht gewellt ist. Hierdurch kann die Stabilität des Zentrierrings verbessert werden. Somit ist es möglich, breitere Zentrierringe vorzusehen, die keine Verwerfungen aufweisen.
Figur 12 zeigt im eingebauten Zustand eine Ausführungsform mit einer schmalen Dichtbreite wie Figur 4, bei der ursprünglich alle Ringzähne 5 über die Spitzen gemessen gleiche Dicke aufweisen und vollständig mit Weichstoffauflagen 2 abgedeckt sind. Durch die optimale Verdichtung der Weichstoffauflagen 2 sowohl über den Spitzen als auch in den dazwischen liegenden Tälern weisen diese Dichtungen eine Federcharakteristik auf. Ferner ist ebenfalls ein Zentrierring 12 vorgesehen. Der Zentrierring 12 ist entsprechend dem in Figur 11 dargestellten Zentrierring wellenförmig oder weist einen winkelförmigen bzw. zackigen Querschnitt auf. Die Wellen oder Winkel bzw. Zacken des Zentrierrings weisen eine Höhe auf, die geringer ist, als die Höhe der Ringzähne 3, 4 oder 5, um somit eine höhere Flächenpressung zu erzielen. Durch die winkelförmige Ausgestaltung des Zentrierrings kann die Stabilität weiter verbessert werden. Hierdurch kann der Zentrierring breiter ausgebildet werden. Beispielsweise ist es möglich, bei einer Blechdicke von ca. 0,1 mm eine Zentrierringbreite von mehr als 20 mm, insbesondere mehr als 30 mm und ggf. sogar mehr als 50 mm zu realisieren, ohne dass Verwerfungen auftreten.
Figur 13 zeigt eine Winkelringdichtung bestehend aus dem Grundkörper 1 und Weichstoffauflagen 2, welche bereits vor dem Einbau in die Ringzähne 5 eingedrückt sind und etwas über die jeweils äußersten Ringzähne herausragen. Bei dieser Ausführungsform ist beim Einbau die Verletzungsgefahr durch die scharfen Blechkanten vermindert, insbesondere wenn die Weichstoffauflagen in diesem Bereich miteinander verklebt sind. Diese Ausführungsformen zeichnen sich außerdem durch erhöhte Steifigkeit aus.

In den Figuren sind die Ringzähne 3,4,5 mit relativ spitzen Winkeln unter 90° dargestellt. Die erfindungsgemäßen Winkelringdichtungen können aber auch Ringzähne mit stumpferen Winkeln aufweisen, insbesondere auch ungefähr rechte Winkel. Wichtig ist insbesondere, dass sie eine Federcharakteristik aufweisen. Hierbei ist die Form in bevorzugter Ausführungsform der Federcharakteristik der mit Weichstoffauflage abgedeckten Ringzähne 5 angepasst. Insbesondere durch Materialwahl und Materialdicke der abgedeckten Ringzähne 5 kann erzielt werden, dass diese beim Einbau teilweise plastisch verformt werden. Auf Grund der trotz der plastischen Verformung verbleibenden Elastizität wird durch die Spitzen der abgedeckten Ringzähne 5 ein erhöhter Druck in diesem Bereich auf die Weichstoffauflage 2 ausgeübt und somit die Dichtigkeit erhöht.

## Patentansprüche

1. Dichtungsanordnung insbesondere für flache Flanschverbindungen mit einem ringförmigen, metallischen Grundkörper (1) und beidseitig vorhandenen Weichstoffauflagen (2) vorzugsweise aus Graphit oder PTFE, wobei der Grundkörper innen und/oder außen radial umlaufende Ringzähne (3, 4) aufweisen kann, die im eingebauten Zustand einen linienförmigen, metallischen Kontakt ermöglichen und eine Federcharakteristik aufweisen, welche so gewählt ist, dass nach dem Ausbau der Dichtung aus den Flanschen die Zahnhöhen im wesentlichen in den Zustand wie vor dem Einbau zurückentspannen können und damit nahezu die ursprüngliche Zahnhöhe zurückerlangt wird,
**dadurch gekennzeichnet, dass**
- der Bereich des Grundkörpers, der von den Weichstoffauflagen abgedeckt ist, mindestens einen winkelförmige Ringzahn (5) aufweist, der beim Einbau zumindest teilweise plastisch verformt wird,
- der metallische Grundkörper (1) aus einem Blech besteht, welches eine Stärke hat von mindestens 0,05 mm, aber weniger als 0,49 mm, insbesondere weniger als 0,45 mm,
- die Stärke des Grundkörpers (1) über den Spitzen gemessen unter 1,35 mm beträgt und die Ringzähne (3, 4, 5) einen Abstand zwischen je zwei benachbarten Ringzähnen unter 3 mm, vorzugsweise zwischen 0,5 und 2 mm, haben und
- die Dichtungsanordnung im ursprünglichen Zustand vor dem Einbau nur eine Dicke von insgesamt weniger als 2,2 mm, vorzugsweise weniger als 1,7 mm aufweist.

2. Dichtungsanordnung insbesondere für flache Flanschverbindungen mit einem ringförmigen, metallischen Grundkörper (1) und beidseitig vorhandenen Weichstoffauflagen (2) vorzugsweise aus Graphit oder PTFE, **dadurch gekennzeichnet, daß**
- der Bereich des Grundkörpers, der von den Weichstoffauflagen abgedeckt ist, mehrere winkelförmige Ringzähne (5) aufweist, die beim Einbau zumindest teilweise plastisch verformt werden, und
- die Dichtungsanordnung einen Zentrierring (12) mit freiliegenden Zentrier-Ringzähnen (3a) aufweist und
entweder
die Ringzähne (5) in dem mit Weichstoffauflage abgedeckten Bereich über die Metallspitzen gemessen eine größere Höhe aufweisen als die freiliegenden Zentrier-Ringzähne (3a)
oder
die Ringzähne (5) in dem mit Weichstoffauflage abgedeckten Bereich über die Metallspitzen gemessen die gleiche Höhe aufweisen wie die freiliegenden Zentrier-Ringzähne und die Ringzähne (5) in dem mit Weichstoffauflage abgedeckten Bereich einen spitzeren Winkel aufweisen als die freiliegenden Zentrier-Ringzähne
oder
die Ringzähne (5) in dem mit Weichstoffauflage abgedeckten Bereich über die Metallspitzen gemessen eine größere Höhe aufweisen als die freiliegenden Zentrier-Ringzähne und die Ringzähne (5) in dem mit Weichstoffauflage abgedeckten Bereich einen spitzeren Winkel aufweisen als die freiliegenden Zentrier-Ringzähne.

3. Dichtungsanordnung nach Anspruch 2, **dadurch gekennzeichnet, daß** der Grundkörper innen und/oder außen radial umlaufende Ringzähne (3, 4) aufweist, die im eingebauten Zustand einen linienförmigen, metallischen Kontakt ermöglichen und eine Federcharakteristik aufweisen, welche so gewählt ist, daß nach dem Ausbau der Dichtung aus den Flanschen die Zahnhöhen im wesentlichen in den Zustand wie vor dem Einbau zurückentspannen können und damit nahezu die ursprüngliche Zahnhöhe zurückerlangt wird.

4. Dichtungsanordnung gemäß einem der Ansprüche 1 bis 3, **dadurch gekennzeichnet, daß** der abgedeckte Ringzahn (5) im eingebauten Zustand eine Druckspitze zur Erhöhung der Dichtigkeit erzeugt und/oder eine derartige Federcharakteristik aufweist, daß er nach dem Ausbau der Dichtung aus den Flanschen 50 bis 90% der Zahnhöhe des ursprünglichen Zustandes aufweist.

5. Dichtungsanordnung gemäß einem der Ansprüche 1 bis 4, **dadurch gekennzeichnet, daß** der metallische Grundkörper (1) über die Metallspitzen gemessen eine Dicke von weniger als 1,2 mm, vorzugsweise 0,4 bis 0,8 mm aufweist.

6. Dichtungsanordnung gemäß Anspruch 1 oder gemäß Anspruch 3, **dadurch gekennzeichnet, daß** die Ringzähne (5) mit Weichstoffauflagen im abgedeckten Bereich über die Metallspitzen gemessen eine geringere Höhe aufweisen als die freiliegenden Ringzähne (3, 4).

7. Dichtungsanordnung gemäß einem der Ansprüche 1 bis 6, **dadurch gekennzeichnet, daß** der metallische Grundkörper (1) aus einem Blech besteht, welches eine Stärke hat von mindestens 0,05 mm, aber weniger als 0,49 mm, insbesondere weniger als 0,45 mm.

8. Dichtungsanordnung gemäß einem der Ansprüche 1 bis 7, **dadurch gekennzeichnet, daß** die Weichstoffauflagen (2) im eingebauten Zustand nahezu maximal verdichtet sind.

9. Dichtungsanordnung gemäß einem der Ansprüche 1 bis 8, **dadurch gekennzeichnet, daß** die Graphitauflagen (2) vor dem Einbau bei einer Dichte von ca. 0,7 kg/m³ eine Dicke von 0,5 bis 1,0 mm und bei einer Dichte von ca. 1,0 kg/m³ eine Dicke von 0,25 bis 0,5 mm aufweisen.

10. Dichtungsanordnung gemäß einem der Ansprüche 1 bis 9, **dadurch gekennzeichnet, daß** der metallische Grundkörper (1) spitze Winkel (8) und vorzugsweise abgerundete Spitzen (9) aufweist.

11. Dichtungsanordnung nach einem der Ansprüche 1 bis 10, **dadurch gekennzeichnet, daß** die Ringzähne (3, 4, 5) abgerundete Spitzen aufweisen, die insbesondere einen Radius größer oder gleich 1 mm, vorzugsweise größer oder gleich 0,75 mm und besonders bevorzugt größer oder gleich 0,5 mm aufweisen.

12. Dichtungsanordnung nach einem der Ansprüche 1 bis 10, **dadurch gekennzeichnet, daß** die Ringzähne (3, 4, 5) einen abgerundeten der Spitze gegenüberliegenden Innenbereich aufweisen, wobei die Rundung vorzugsweise einen Radius größer oder gleich 0,75 mm, insbesondere größer oder gleich 0,5 mm und besonders bevorzugt größer oder gleich 0,25 mm aufweist.

13. Dichtungsanordnung gemäß einem der Ansprüche 1 bis 12, **dadurch gekennzeichnet, daß** die Weichstoffauflagen (2) bereits vor dem Einbau in die Zwischenräume der Ringzähne eingepreßt sind.

14. Dichtungsanordnung gemäß einem der Ansprüche 1 bis 13, **dadurch gekennzeichnet, daß** die Weichstoffauflagen (2) innen und/oder außen über den Rand des metallischen Grundkörpers (1) hinausragen und dort miteinander verklebt oder verpreßt sind.

15. Dichtungsanordnung gemäß einem der Ansprüche 1 bis 14, **dadurch gekennzeichnet, daß** die Ringzähne die Form einer Kammprofildichtung aufweisen, jedoch nicht durch spanende Formgebung hergestellt, sondern durch Umformen hergestellt sind.

16. Dichtungsanordnung gemäß einem der Ansprüche 1 bis 15, **dadurch gekennzeichnet, daß** die Winkeldichtung außen einen Zentrierring aufweist, der an der Außenkante breiter als 4 mm ist und vorzugsweise durch Umformen hergestellt wird und vorzugsweise leicht gewellt und/oder winkelig ist.

17. Dichtungsanordnung gemäß einem der Ansprüche 1 bis 16, **dadurch gekennzeichnet, daß** die Dichtungsanordnung im Einbauzustand auf jeder der beiden Flanschseiten einen Innenzahn und einen Außenzahn mit metallischem Kontakt zum Flansch aufweist und somit eine 3-fache Abdichtung je Flanschseite erfolgt: metallische Innenabdichtung, Weichstoffabdichtung, metallische Außenabdichtung.

18. Dichtungsanordnung gemäß einem der Ansprüche 1 bis 17, **dadurch gekennzeichnet, daß** ein nach innen weisendes Ende des Grundkörpers (1) als Ringzahn (3) ausgebildet ist, wobei eine innere Flanke (10) des Ringzahns (3) eine Flankenlänge (L) von mindestens 40 bis 60% einer Flankenlänge (L') einer benachbarten, weiter außen liegenden Flanke des Ringzahns bzw. eines der Ringzähne aufweist.

19. Dichtungsanordnung nach einem der Ansprüche 1 oder 4 bis 18, **dadurch gekennzeichnet, daß** die Ringzähne (5) in einem mit Weichstoffauflage abgedeckten Bereich einen spitzeren Winkel aufweisen als die freiliegenden Zentrier-Ringzähne.

20. Dichtungsanordnung nach einem der Ansprüche 1 bis 19, **dadurch gekennzeichnet, daß** bei einer Dichtbreite für ANSI B 16,5 Flansche die Weichstoffauflage in Abhängigkeit des Rohrdurchmessers auf jeder Seite eine Breite aufweist, die kleiner ist als 19 mm pro Seite bei 1 Zoll; 16 mm pro Seite bei 2 Zoll; 19 mm pro Seite bei 3 Zoll; 21 mm pro Seite bei 4 Zoll; 24 mm pro Seite bei 6 Zoll; 25 mm pro Seite bei 8 und 10 Zoll; 28 mm pro Seite bei 12 und 14 Zoll; 32 mm pro Seite bei 16 Zoll; 39 mm pro Seite bei 18 und 24 Zoll.

21. Dichtungsanordnung nach einem der Ansprüche 1 bis 19, **dadurch gekennzeichnet, daß** für DIN-Flansche die Weichstoffauflage in Abhängigkeit des Rohrdurchmessers auf jeder Seite eine Breite aufweist, die kleiner ist als: bei DN 25 kleiner als 11 mm; bei DN 40 und 50 kleiner als 13 mm; bei DN 80 kleiner als 15 mm; bei DN 100/150 kleiner als 17 mm; bei DN 200 bis DN 300 kleiner als 19 mm; bei DN 400 bis DN 500 kleiner als 26 mm; bei DN 600 kleiner als 27 mm.

22. Dichtungsanordnung nach Anspruch 2 oder nach Anspruch 3, **dadurch gekennzeichnet, daß** die Stärke des Grundkörpers (1) über den Spitzen gemessen unter 1,35 mm beträgt und die Ringzähne (3, 4, 5) einen Abstand zwischen je zwei benachbarten Ringzähnen unter 3 mm, vorzugsweise zwischen 0,5 mm und 2 mm, haben.

23. Dichtungsanordnung nach Anspruch 2 oder nach Anspruch 3, **dadurch gekennzeichnet, daß** die Stärke des Grundkörpers (1) über den Spitzen gemessen unter 1,2 mm beträgt und die Ringzähne (3, 4, 5) einen Abstand zwischen je zwei benachbarten Ringzähnen unter 4 mm haben.

24. Dichtungsanordnung nach Anspruch 2, **dadurch gekennzeichnet, daß**
- der metallische Grundkörper (1) eine Dicke von weniger als 0,5 mm, insbesondere weniger als 0,49 mm und besonders bevorzugt weniger als 0,3 mm aufweist,
- die Stärke des Grundkörpers (1) über den Spitzen gemessen unter 1,35 mm beträgt und die Ringzähne einen Abstand zwischen je zwei benachbarten Ringzähnen unter 3 mm, vorzugsweise zwischen 0,5 und 2 mm, haben und
- die Dichtungsanordnung im ursprünglichen Zustand vor dem Einbau nur eine Dicke von insgesamt weniger als 2,2 mm, vorzugsweise weniger als 1,7 mm aufweist.

25. Dichtungsanordnung nach Anspruch 2, **dadurch gekennzeichnet, daß**
- der metallische Grundkörper (1) eine Dicke von weniger als 0,5 mm, insbesondere weniger als 0,49 mm und besonders bevorzugt weniger als 0,3 mm aufweist,
- die Stärke des Grundkörpers (1) über den Spitzen gemessen unter 1,2 mm beträgt und die Ringzähne einen Abstand zwischen je zwei benachbarten Ringzähnen unter 4 mm haben und
- die Dichtungsanordnung im ursprünglichen Zustand vor dem Einbau nur eine Dicke von insgesamt weniger als 2,2 mm, vorzugsweise weniger als 1,7 mm aufweist.

26. Dichtungsanordnung nach Anspruch 2, **dadurch gekennzeichnet, daß** der Zahnabstand der Ringzähne (5) im mit den Weichstoffauflagen abgedeckten Bereich unter 3 mm ist.

## Claims

1. Sealing arrangement, particularly for flat flange connections, having a ring-shaped, metallic base body (1) and soft material linings (2) present on both sides, preferably of graphite or PTFE, whereby the base body (1) may have ring teeth (3, 4) that run radially around the circumference, on the inside and/or outside, which allow line-shaped metallic contact, in the installed state, and have a spring characteristic that is selected in such a manner that after the seal is removed from the flanges, the tooth heights can relax back essentially into the state as before installation, and thereby almost the original tooth height is achieved again,
**characterized in that**
- the region of the base body that is covered by the soft material linings has at least one angle-shaped ring tooth (5), which is at least partially plastically deformed during installation,
- the metallic base body (1) consists of a sheet metal that has a thickness of at least 0.05 mm, but less than 0.49 mm, particularly less than 0.45 mm,
- the height of the base body (1), measured over the tips, is less than 1.35 mm, and the ring teeth (3, 4, 5) have a distance between two adjacent ring teeth, in each instance, of less than 3 mm, preferably between 0.5 and 2 mm, and
- the sealing arrangement, in the original state before the installation, only has a thickness of a total of less than 2.2 mm, preferably less than 1.7 mm.

2. Sealing arrangement, particularly for flat flange connections, having a ring-shaped metallic base body (1) and soft material linings (2) present on both sides, preferably of graphite or PTFE, **characterized in that**
- the region of the base body that is covered by the soft material linings has a plurality of angle-shaped ring teeth (5) which are at least partially plastically deformed during installation, and
- the sealing arrangement has a centering ring (12) with exposed ring teeth (3a),
and
either
the ring teeth (5) have a greater height, measured in the region covered with soft material lining, than the exposed centering ring teeth (3a), measured over the metal tips,
or
the ring teeth (5) in the region covered with soft material lining have the same height as the exposed centering ring teeth, measured over the metal tips, and the ring teeth (5) have a more acute angle in the region covered with soft material lining than the exposed centering ring teeth,
or
the ring teeth (5) have a greater height, measured in the region covered with soft material lining, than the exposed centering ring teeth, measured over the metal tips, and the ring teeth (5) have a more acute angle in the region covered with soft material lining than the exposed centering ring teeth.

3. Sealing arrangement according to claim 2, **characterized in that** the base body has ring teeth (3, 4) that run radially around the circumference, on the inside and/or outside, which allow line-shaped metallic contact, in the installed state, and have a spring characteristic that is selected in such a manner that after the seal is removed from the flanges, the tooth heights can relax back essentially into the state as before installation, and thereby almost the original tooth height is achieved again.

4. Sealing arrangement according to one of claims 1 to 3, **characterized in that** the covered ring tooth (5), in the installed state, generates a pressure peak to increase the seal and/or has a spring characteristic such that after the seal is removed from the flanges, it has 50 to 90% of the tooth height of the original state.

5. Sealing arrangement according to one of claims 1 to 4, **characterized in that** the metallic base body (1) has a height of less than 1.2 mm, preferably 0.4 to 0.8 mm, measured over the metal tips.

6. Sealing arrangement according to claim 1 or according to claim 3, **characterized in that** the ring teeth (5), with soft material linings in the covered region, have a height less than that of the exposed ring teeth (3, 4), measured over the metal tips.

7. Sealing arrangement according to one of claims 1 to 6, **characterized in that** the metallic base body (1) consists of a sheet metal that has a thickness of at least 0.05 mm, but less than 0.49 mm, particularly less than 0.45 mm.

8. Sealing arrangement according to one of claims 1 to 7, **characterized in that** the soft material linings (2) are almost maximally compressed in the installed state.

9. Sealing arrangement according to one of claims 1 to 8, **characterized in that** the graphite linings (2), before installation, have a thickness of 0.5 to 1.0 mm at a density of approximately 0.7 kg/m³, and a thickness of 0.25 to 0.5 mm at a density of approximately 1.0 kg/m³.

10. Sealing arrangement according to one of claims 1 to 9, **characterized in that** the metallic base body (1) has acute angles (8) and preferably rounded tips (9).

11. Sealing arrangement according to one of claims 1 to 10, **characterized in that** the ring teeth (3, 4, 5) have rounded tips, which particularly have a radius greater than or equal to 1 mm, preferably greater than or equal to 0.75 mm, and particularly preferably greater than or equal to 0.5 mm.

12. Sealing arrangement according to one of claims 1 to 10, **characterized in that** the ring teeth (3, 4, 5) have a rounded inner region lying opposite the tip, whereby the rounding preferably has a radius greater than or equal to 0.75 mm, particularly greater than or equal to 0.5 mm, and particularly preferably greater than or equal to 0.25 mm.

13. Sealing arrangement according to one of claims 1 to 12, **characterized in that** the soft material linings (2) are pressed into the interstices of the ring teeth even before installation.

14. Sealing arrangement according to one of claims 1 to 13, **characterized in that** the soft material linings (2) project beyond the edge of the metallic base body (1) on the inside and/or the outside, and are glued or pressed to one another there.

15. Sealing arrangement according to one of claims 1 to 14, **characterized in that** the ring teeth have the shape of a comb profile seal, and are not produced by means of shaping by means of cutting, but are produced by means of shaping by means of deformation.

16. Sealing arrangement according to one of claims 1 to 15, **characterized in that** the angle seal has a centering ring on the outside, which is wider than 4 mm on the outer edge, and is preferably produced by means of deformation, and is preferably slightly corrugated and/or angled.

17. Sealing arrangement according to one of claims 1 to 16, **characterized in that** the sealing arrangement, in the installed state, on each of both flange sides comprises an inner tooth and an outer tooth having metallic contact to the flange, and thus a three-way seal per flange side takes place: metallic inner seal, soft material seal, metallic outer seal.

18. Sealing arrangement according to one of claims 1 to 17, **characterized in that** an end of the base body (1) that faces inward is configured as a ring tooth (3), whereby an inner flank (10) of the ring tooth (3) has a flank length (L) of at least 40 to 60% of a flank length (L') of an adjacent flank of the ring tooth or one of the ring teeth that lies farther on the outside.

19. Sealing arrangement according to one of claims 1 or 4 to 18, **characterized in that** the ring teeth (5) have a more acute angle in a region covered with soft material lining than the exposed centering ring teeth.

20. Sealing arrangement according to one of claims 1 to 19, **characterized in that** at a sealing width for ANSI B 16.5 flanges, the soft material lining has a width on each side as a function of the pipe diameter, which width is less than 19 mm per side at 1 inch; 16 mm per side at 2 inches; 19 mm per side at 3 inches; 21 mm per side at 4 inches, 24 mm per side at 6 inches; 25 mm per side at 8 and 10 inches; 28 mm per side at 12 and 14 inches; 32 mm per side at 16 inches; 39 mm per side at 18 and 24 inches.

21. Sealing arrangement according to one of claims 1 to 19, **characterized in that** for DIN flanges the soft material lining has a width on each side, as a function of the pipe diameter, which width is less than: at DN 25, less than 11 mm; at DN 40 and 50, less than 13 mm; at DN 80, less than 15 mm; at DN 100/150, less than 17 mm; at DN 200 to DN 300, less than 19 mm; at DN 400 to DN 500, less than 26 mm; at DN 600, less than 27 mm.

22. Sealing arrangement according to claim 2 or according to claim 3, **characterized in that** the height of the base body (1), measured over the tips, is less than 1.35 mm, and the ring teeth (3, 4, 5) have a distance between two adjacent ring teeth, in each instance, of less than 3 mm, preferably between 0.5 and 2 mm.

23. Sealing arrangement according to claim 2 or according to claim 3, **characterized in that** the height of the base body (1), measured over the tips, is less than 1.2 mm, and the ring teeth (3, 4, 5) have a distance between two adjacent ring teeth, in each instance, of less than 4 mm.

24. Sealing arrangement according to claim 2, **characterized in that**
- the metallic base body (1) has a thickness of less than 0.5 mm, particularly less than 0.49 mm, and particularly preferably less than 0.3 mm,
- the height of the base body (1), measured over the tips, is less than 1.35 mm, and the ring teeth have a distance between two adjacent ring teeth, in each instance, of less than 3 mm, preferably between 0.5 and 2 mm, and
- the sealing arrangement, in the original state, before installation, only has a thickness of a total of less than 2.2 mm, preferably less than 1.7 mm.

25. Sealing arrangement according to claim 2, **characterized in that**
- the metallic base body (1) has a thickness of less than 0.5 mm, particularly less than 0.49 mm, and particularly preferably less than 0.3 mm,
- the height of the base body (1), measured over the tips, is less than 1.2 mm, and the ring teeth have a distance between two adjacent ring teeth, in each instance, of less than 4 mm, and
- the sealing arrangement, in the original state, before installation, only has a thickness of a total of less than 2.2 mm, preferably less than 1.7 mm.

26. Sealing arrangement according to claim 2, **characterized in that** the ring teeth (5) in the region covered with soft material lining have a distance between two adjacent ring teeth, in each instance, of less than 3 mm.

## Revendications

1. Agencement d'étanchéité, en particulier pour liaisons entre brides plates, avec un corps de base (1) métallique, en forme d'anneau, et des revêtements en matériau souple (2) existant sur les deux côtés, de préférence composés de graphite ou de PTFE, le corps de base (1) peut présenter de dents annulaires (3, 4) faisant radialement le pourtour, intérieurement et/ou extérieurement, permettant d'établir, à l'état monté, un contact métallique linéaire, et présentent une caractéristique d'élasticité choisie de manière que, après démontage du joint d'étanchéité extrait des brides, les hauteurs de dents peuvent se relaxer en revenant pratiquement à l'état dans lequel elles se trouvaient avant montage et, ainsi, reprendre à peu près la hauteur de dent initiale,
**caractérisé en ce que**
- la zone du corps de base recouverte par les revêtements en matériau souple présente au moins une dent annulaire (5) en forme de zig zag, déformée au moins partiellement plastiquement lors du montage,
- le corps de base (1) métallique est composé d'une tôle, présentant une épaisseur d'au moins 0,05 mm, mais inférieure à 0,49 mm, en particulier inférieure à 0,45 mm,
- l'épaisseur du corps de base (1), mesurée sur les pointes, est inférieure à 1,35 mm, et les dents annulaires (3, 4, 5) présentent, entre chaque fois deux dents annulaires voisines, un espacement inférieur à 3 mm, de préférence dans la fourchette comprise entre 0,5 et 2 mm, et
- à l'état initial, avant le montage, l'agencement d'étanchéité ne présente qu'une épaisseur globalement inférieure à 2,2 mm, de préférence inférieure à 1,7 mm.

2. Agencement d'étanchéité, en particulier pour liaisons entre brides plates, avec un corps de base (1) métallique, en forme d'anneau, et des revêtements en matériau souple (2) existant sur les deux côtés, de préférence composés de graphite ou de PTFE, **caractérisé en ce que**
- la zone du corps de base recouverte par les revêtements en matériau souple présente une pluralité de dents annulaires (5) en forme de zig zag, déformées au moins partiellement plastiquement lors du montage, et
- l'agencement d'étanchéité présente une bague de centrage (12) munie de dents annulaires de centrage (3a) exposées, et
soit
les dents annulaires (5), dans la zone recouverte par le revêtement en matériau souple, présentent, mesurée sur les pointes métalliques, une hauteur plus grande que celle des dents annulaires de centrage (3a) exposées,
soit
les dents annulaires (5), dans la zone recouverte par le revêtement en matériau souple, présentent, mesurée sur les pointes métalliques, une hauteur égales à celle des dents annulaires de centrage, et les dents annulaires (5), dans la zone recouverte par le revêtement en matériau souple, présentent un angle plus aigu que celui des dents annulaires de centrage exposées,
soit
les dents annulaires (5), dans la zone recouverte par le revêtement en matériau souple, présentent, mesurée sur les pointes métalliques, une hauteur plus grande que celle des dents annulaires de centrage exposées, et les dents annulaires (5), dans la zone recouverte par le revêtement en matériau souple, présentent un angle plus aigu que celui des dents annulaires de centrage exposées.

3. Agencement d'étanchéité selon la revendication 2, **caractérisé en ce que** le corps de base présente des dents annulaires (3, 4) faisant radialement le pourtour, intérieurement et/ou extérieurement, permettant d'établir, à l'état monté, un contact métallique linéaire, et présentent une caractéristique d'élasticité choisie de manière que, après démontage du joint d'étanchéité extrait des brides, les hauteurs de dents peuvent se relaxer en revenant pratiquement à l'état dans lequel elles se trouvaient avant montage et, ainsi, reprendre à peu près la hauteur de dent initiale.

4. Agencement d'étanchéité selon l'une des revendications 1 à 3, **caractérisé en ce que** la dent annulaire (5) recouverte, à l'état monté, génère un pic de pression pour augmenter l'étanchéité et/ou présente une caractéristique élastique telle que, après démontage du joint d'étanchéité extrait des brides, elle présente de 50 à 90 % de la hauteur de dent qu'elle avait à l'état initial.

5. Agencement d'étanchéité selon l'une des revendications 1 à 4, **caractérisé en ce que** le corps de base (1) métallique présente, mesurée sur les pointes métalliques, une épaisseur inférieure à 1,2 mm, de préférence dans la fourchette comprise entre 0,4 et 0,8 mm.

6. Agencement d'étanchéité selon la revendication 1 ou selon la revendication 3, **caractérisé en ce que** les dents annulaires (5) munies de revêtements en matériau souple, à l'état recouvert, mesurée sur les pointes métalliques, présentent une plus petite hauteur que les dents annulaires (3, 4) exposées.

7. Agencement d'étanchéité selon l'une des revendications 1 à 6, **caractérisé en ce que** le corps de base (1) métallique est composé d'une tôle, présentant une épaisseur d'au moins 0,05 mm, mais inférieure à 0,49 mm, en particulier inférieure à 0,45 mm.

8. Agencement d'étanchéité selon l'une des revendications 1 à 7, **caractérisé en ce que** les revêtements en matériau souple (2), à l'état monté, sont compressés à peu près au maximum.

9. Agencement d'étanchéité selon l'une des revendications 1 à 8, **caractérisé en ce que**, avant montage, les revêtements en graphite (2), pour une masse volumique d'à peu près 0,7 kg/m³, présentent une épaisseur dans la fourchette comprise entre 0,5 et 1,0 mm et, pour une masse volumique d'à peu près 1,0 kg/m³, présentent une épaisseur dans la fourchette comprise entre 0,25 et 0,5 mm.

10. Agencement d'étanchéité selon l'une des revendications 1 à 9, **caractérisé en ce que** le corps de base (1) métallique présente des angles aigus (8) et des pointes (9) de préférence arrondies.

11. Agencement d'étanchéité selon l'une des revendications 1 à 10, **caractérisé en ce que** les dents annulaires (3, 4, 5) présentent des pointes arrondies, ayant en particulier un rayon supérieur ou égal à 1 mm, de préférence supérieur ou égal à 0,75 mm et, de manière particulièrement préférée, supérieur ou égal à 0,5 mm.

12. Agencement d'étanchéité selon l'une des revendications 1 à 10, **caractérisé en ce que** dents annulaires (3, 4, 5) présentent une zone intérieure arrondie, située à l'opposé de la pointe, l'arrondi ayant de préférence un rayon supérieur ou égal à 0,75 mm, en particulier supérieur ou égal à 0,5 mm et, de manière particulièrement préférée, supérieur ou égal à 0,25 mm.

13. Agencement d'étanchéité selon l'une des revendications 1 à 12, **caractérisé en ce que** les revêtements en matériau souple (2) sont déjà enfoncés dans les espaces intermédiaires des dents annulaires avant montage.

14. Agencement d'étanchéité selon l'une des revendications 1 à 13, **caractérisé en ce que** les revêtements en matériau souple (2) ressortent, intérieurement et extérieurement, du bord du corps de base (1) métallique, et y sont collés ou pressés ensemble.

15. Agencement d'étanchéité selon l'une des revendications 1 à 14, **caractérisé en ce que** les dents annulaires présentent la forme d'un joint d'étanchéité à profil en peigne, sans cependant être fabriquées par un façonnage de formage opérant avec enlèvement de copeaux, mais en étant fabriquées par un façonnage opérant par déformation.

16. Agencement d'étanchéité selon l'une des revendications 1 à 15, **caractérisé en ce que** le joint d'étanchéité d'angle présente extérieurement une bague de centrage, d'une largeur supérieure à 4 mm sur l'arête extérieure et, de préférence, fabriqué par un façonnage opérant par déformation et, de préférence, légèrement ondulé et/on en chevron.

17. Agencement d'étanchéité selon l'une des revendications 1 à 16, **caractérisé en ce que**, à l'état monté, l'agencement d'étanchéité présente, sur chacune des deux faces de bride, une dent intérieure et une dent extérieure avec contact métallique avec la bride et, ainsi, une étanchéité triple est effectuée pour chaque face de bride : étanchéité intérieure métallique, étanchéité par matériau souple, étanchéité extérieure métallique.

18. Agencement d'étanchéité selon l'une des revendications 1 à 17, **caractérisé en ce qu'**une extrémité, tournée vers l'intérieur, du corps de base (1) est réalisée sous forme de dent annulaire (3), un flanc intérieur (10) de la dent annulaire (3) présentant une longueur de flanc (L) d'au moins 40 à 60 % d'une longueur de flanc (L') d'un flanc voisin, situé plus à l'extérieur, de la dent annulaire ou d'une des dents annulaires.

19. Agencement d'étanchéité selon l'une des revendications 1 ou 4 à 18, **caractérisé en ce que** les dents annulaires (5) présentent, dans une zone recouverte par un revêtement en matériau souple, un angle plus aigu que celui des dents annulaires de centrage exposées.

20. Agencement d'étanchéité selon l'une des revendications 1 à 19, **caractérisé en ce que**, dans le cas d'une largeur d'étanchéité pour des brides ANSI B 16,5, le revêtement en matériau souple présente, en fonction du diamètre de tube, de chaque côté, une largeur inférieure à 19 mm par côté pour 1 pouce ; 16 mm par côté pour 2 pouces ; 19 mm par côté pour 3 pouces ; 21 mm par côté pour 4 pouces ; 24 mm par côté pour 6 pouces ; 25 mm par côté pour 8 et 10 pouces ; 28 mm par côté pour 12 et 14 pouces ; 32 mm par côté pour 16 pouces ; 39 mm par côté pour 18 et 24 pouces.

21. Agencement d'étanchéité selon l'une des revendications 1 à 19, **caractérisé en ce que**, pour des brides DIN, le revêtement en matériau souple présente, en fonction du diamètre de tube, de chaque côté, une largeur inférieure à : 11 mm par côté pour DN 25 ; 13 mm pour DN 40 et 50 ; 15 mm pour DN 80 ; 17 mm pour DE 100/150 ; 19 mm pour DN 200 à DN 300 ; 26 mm pour DN 400 à DN 500 ; 27 mm pour DN 600.

22. Agencement d'étanchéité selon la revendication 2 ou selon la revendication 3, **caractérisé en ce que** l'épaisseur du corps de base (1), mesurée sur les pointes, est inférieure à 1,35 mm, et les dents annulaires (3, 4, 5) présentent, entre deux dents annulaires voisines, un espacement inférieur à 3 mm, de préférence dans la fourchette comprise entre 0,5 mm et 2 mm.

23. Agencement d'étanchéité selon la revendication 2 ou selon la revendication 3, **caractérisé en ce que** l'épaisseur du corps de base (1), mesurée sur les pointes, est inférieure à 1,2 mm, et les dents annulaires (3, 4, 5) présentent, entre deux dents annulaires voisines, un espacement inférieur à 4 mm.

24. Agencement d'étanchéité selon la revendication 2, **caractérisé en ce que**
- le corps de base (1) métallique présente une épaisseur inférieure à 0,5 mm, en particulier inférieure à 0,49 mm et, de manière particulièrement préférée, inférieure à 0,3 mm,
- l'épaisseur du corps de base (1), mesurée sur les pointes, est inférieure à 1,35 mm, et les dents annulaires présentent, entre deux dents annulaires voisines, un espacement inférieur à 3 mm, de préférence dans la fourchette comprise entre 0,5 et 2 mm, et
- à l'état initial avant montage, l'agencement d'étanchéité ne présente qu'une épaisseur globalement inférieure à 2,2 mm, de préférence inférieure à 1,7 mm.

25. Agencement d'étanchéité selon la revendication 2, **caractérisé en ce que**
le corps de base (1) métallique présente une épaisseur inférieure à 0,5 mm, en particulier inférieure à 0,49 mm et, de manière particulièrement préférée, inférieure à 0,3 mm,
- l'épaisseur du corps de base (1), mesurée sur les pointes, est inférieure à 1,2 mm, et les dents annulaires présentent, entre deux dents annulaires voisines, un espacement inférieur à 4 mm, et
- à l'état initial avant montage, l'agencement d'étanchéité ne présente qu'une épaisseur globalement inférieure à 2,2 mm, de préférence inférieure à 1,7 mm.

26. Agencement d'étanchéité selon la revendication 2, **caractérisé en ce que** l'espacement entre dents des dents annulaires (5), dans la zone recouverte par les couches de matériau souple, est inférieur à 3 mm.
